(19) **Europäisches Patentamt**

**European Patent Office**

**Office européen des brevets**

(11) **EP 0 873 783 B1**

(12) **EUROPÄISCHE PATENTSCHRIFT**

(45) Veröffentlichungstag und Bekanntmachung des Hinweises auf die Patenterteilung:
**26.06.2002 Patentblatt 2002/26**

(51) Int Cl.[7]: **B01J 8/06**, B01J 19/00

(21) Anmeldenummer: **98107290.3**

(22) Anmeldetag: **22.04.1998**

(54) **Vorrichtung und Verfahren zur Temperaturmessung in Rohrreaktoren**

Apparatus and method to measure the temperture in tubular reactors

Dispositif et méthode pour mesurer la température dans des réacteurs tubulaires

(84) Benannte Vertragsstaaten:
**BE DE DK ES FR GB IT NL**

(30) Priorität: **23.04.1997 DE 19717165**

(43) Veröffentlichungstag der Anmeldung:
**28.10.1998 Patentblatt 1998/44**

(73) Patentinhaber: **BASF AKTIENGESELLSCHAFT**
**67056 Ludwigshafen (DE)**

(72) Erfinder:
• **Schliephake, Volker, Dr.**
**67105 Schifferstadt (DE)**
• **Hammon, Ulrich, Dr.**
**68165 Mannheim (DE)**

• **Rauh, Ulrich**
**67117 Limburgerhof (DE)**
• **Schraut, Armin, Dr.**
**64625 Bensheim (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
**DE-A- 4 431 949         US-A- 4 342 699**
**US-A- 4 929 798**

## Beschreibung

Die vorliegende Erfindung betrifft eine Vorrichtung und ein Verfahren zur repräsentativen Temperaturmessung in gleichartigen, mit Feststoffteilchen gefüllten Rohrreaktoren, wobei wenigstens ein Rohrreaktor eine Temperaturmeßvorrichtung enthält.

Exotherme Reaktionen, wie z.B. Oxidationsreaktionen, werden im industriellen Maßstab wegen der Wärmeübertragung und der engen Verweilzeitverteilung oftmals in Rohrreaktoren durchgeführt (vgl. z.B. US-A-3 147 084, DT-PS 11 85 590 und DE-PS 29 03 582), wobei üblicherweise der Reaktionsraum in den Rohren liegt und der Raum zwischen den Rohren von einem fluiden Wärmeträgermedium zur Aufheizung oder Kühlung durchflossen wird. Im allgemeinen wird die Reaktion mit Hilfe eines heterogenen Katalysators als Gasphasenreaktion durchgeführt. Als Katalysatoren werden im allgemeinen Vollkatalysatoren oder mit Aktivmasse beschichtete Trägerkörper identischer geometrischer Form verwendet. Derartige Reaktoren finden in der chemischen Industrie beispielsweise Anwendung bei der Herstellung von Phthalsäureanhydrid aus o-Xylol oder der Herstellung von Acrolein bzw. Acrylsäure aus Propen oder Propan (vgl. z.B. DE-A-1 962 431 und DE-A 2 943 707).

Zur Beurteilung des Reaktorzustands, der zu erwartenden Produktqualität sowie des Umsatzes ist die Temperatur längs des Strömungswegs der reagierenden Komponenten im Reaktor wesentlich. Üblicherweise wird dieses Temperaturprofil mittels eines Thermoelements oder eines Widerstandsthermometers ermittelt. Für den industriellen Einsatz wird das Thermoelement oder Widerstandsthermometer mechanisch gegen Beschädigung geschützt. Üblicherweise wird es hierzu in eine Thermoschutzhülse eingebaut. Eine solche Thermohülse ist nun aber mit dem Nachteil verbunden, daß sie ein bestimmtes Volumen einnimmt und damit das Strömungsprofil und somit das Druckverlustverhalten des Rohres einschließlich seiner Füllung im allgemeinen verändert. Da es andererseits wesentlich ist, daß die Temperaturmessungen an einem oder mehreren Rohrreaktoren durchgeführt werden, die repräsentativ für alle Rohrreaktoren sind, soll das Reaktionsgeschehen in dem Rohrreaktor, in dem die Temperatur gemessen wird, identisch sein mit dem Geschehen in den Rohrreaktoren ohne Temperaturmeßvorrichtung.

Somit bestand die Aufgabe der vorliegenden Erfindung darin, eine Vorrichtung und ein Verfahren zu schaffen, das die Temperaturmessung in einem Rohrreaktor unter repräsentativen Bedingungen ermöglicht.

Überraschenderweise wurde gefunden, daß sich dieses Problem lösen läßt, wenn Rohrreaktoren mit und ohne Temperaturmeßvorrichtung so eingestellt werden, daß die Masse der eingefüllten Feststoffteilchen linear proportional zur freien Querschnittsfläche des jeweiligen Rohrreaktors ist und der Strömungswiderstand oder Druckverlust und somit die mittlere Lineargeschwindigkeit in den Rohrreaktoren identisch ist, wenn eine Gasmenge proportional zur freien Querschnittsfläche über das Rohr geführt wird. Bei Einhaltung dieser beiden Bedingungen werden in den Rohrreaktoren mit und ohne Temperaturmeßvorrichtung reaktionskinetisch und thermisch vergleichbare Verhältnisse hergestellt.

Somit betrifft die Erfindung eine Reaktorvorrichtung umfassend mindestens zwei gleichartige, mit Feststoffteilchen gefüllte Rohrreaktoren, wobei wenigstens ein Rohrreaktor eine Temperaturmeßvorrichtung enthält, die Reaktorvorrichtung dadurch gekennzeichnet ist, daß Rohrreaktoren so ausgelegt sind, daß sowohl das Verhältnis von Masse der Feststoffteilchen zur freien Querschnittsfläche des jeweiligen Rohrreaktors als auch der Druckverlust, gemessen durch Leiten eines inerten Gases proportional quer zur freien Querschnittsfläche, über den jeweiligen Rohrreaktor gleich sind. Weiterhin betrifft die Erfindung ein Verfahren zur Behandlung von fluiden Massen unter Erzeugung oder Verbrauch von thermischer Energie, bei der die fluiden Massen durch eine Reaktorvorrichtung umfassend mindestens zwei gleichartige, mit Feststoffteilchen gefüllte Rohrreaktoren geführt werden, wobei wenigstens ein Rohrreaktor eine Temperaturmeßvorrichtung enthält, und wobei in dieser die Temperatur gemessen wird, wobei das Verfahren dadurch gekennzeichnet ist, daß eine Reaktorvorrichtung gemäß der Erfindung wie oben beschrieben verwendet wird. Hierbei sind die Rohrreaktoren so ausgelegt, daß sowohl das Verhältnis von Masse der Feststoffteilchen zur freien Querschnittsfläche des jeweiligen Rohrreaktors als auch das durchgeleitete Volumen an reaktionsfähigem Gas pro Querschnittsfläche, über den jeweiligen Rohrreaktor gleich sind. Bevorzugte Ausführungsformen der Erfindung sind in der nachfolgenden Beschreibung, den Ausführungsbeispielen, den Figuren und den Unteransprüchen erläutert.

Bei den Figuren zeigen:

Fig. 1    graphisch die Temperatur in Abhängigkeit von der Länge ab Beginn der Heizzone für die in den Beispielen beschriebenen Versuche 1 bis 5; und

Fig. 2    graphisch die Temperatur in Abhängigkeit von der Länge ab Beginn der Heizzone für die in den Beispielen beschriebenen Versuche 1 und 6 bis 9.

Die Art der einsetzbaren Rohrreaktoren unterliegt keiner besonderen Beschränkung. Grundsätzlich eignen sich alle Rohrreaktoren, wie z.B. Rohrbündelreaktoren, mit Katalysator beschichtete Wärmeaustauscher etc., wobei vorteilhafterweise Rohrbündelreaktoren eingesetzt werden. Diese können variieren in der Anzahl der eingesetzten Rohre, der Anordnung der Rohre, der Länge der eingesetzten Rohre, der Ausformung des Eingangs- und Ausgangsbereichs sowohl reaktions- als auch wärmeträgerseitig, des Volumens des umströmenden Wärmeträgermediums und der Strömungsführung des Wämeträgermediums - z.B. quer, gleich- oder gegenläufig - zu den Reaktionsrohren. Zur Steuerung der Wärmeabfuhr bzw. Wärmezufuhr werden vorteilhafterweise Rohrbündelreaktoren eingesetzt, die gleichzeitig als Wärmetauscher ausgebildet sind, d.h. der Reaktionsraum liegt in den Rohren, während der Raum zwischen den Rohren von einem fluiden Wärmeträgermedium durchflossen wird. Im folgenden werden die Rohrreaktoren ohne Temperaturmeßvorrichtung auch als *Reaktionsrohre* bezeichnet, während der/die Reaktor/en mit Temperaturmeßvorrichtung auch als *Thermorohre* bezeichnet werden.

In einer besonders vorteilhaften Ausgestaltung der Erfindung sind die Rohrreaktoren so ausgelegt, daß das Verhältnis von freier Querschnittsfläche zum Umfang des jeweiligen Rohrreaktors, sowohl bei den Rohren mit, als auch bei den Rohren ohne Temperaturmeßeinrichtung, gleich ist. Auf diese Weise werden besonders identische Verhältnisse in beiden Arten von Rohren hergestellt.

Besonders bevorzugt sind auch geometrische Verhältnisse in den Rohrreaktoren mit und ohne Temperaturmeßvorrichtung, die sicherstellen, daß das Verhältnis von katalysatorgefülltem Reaktorvolumen zu wärmeaustauschender Außenfläche identisch ist.

Erfindungsgemäß sind die Rohrreaktoren mit Feststoffteilchen, insbesondere einem Katalysator, befüllt. Soweit im folgenden allgemein von *Katalysator* oder *Katalysatorteilchen* die Rede ist, bezieht sich dies auch allgemein auf Feststoffteilchen. Die Art der Feststoffteilchen bzw. des Katalysators hängt ab von der durchgeführten Reaktion, wobei die Art der Reaktionen an sich keinen Beschränkungen unterliegt. Grundsätzlich eignet sich das erfmdungsgemäße Verfahren zur Behandlung von fluiden Massen für alle Reaktionen, bei denen Temperaturänderungen stattfinden, also thermische Energie erzeugt oder verbraucht wird. Daneben eignet sich das Verfahren auch für alle Arten von physikalisch-chemischen Prozessen, bei denen die Temperatur eine Rolle spielt und/oder an denen Stoffänderungen beteiligt sind. So kann z.B. das Aufheizen eines Fluidstroms in einem Rohrbündelwärmetauscher nach demselben Prinzip gemessen werden. Besonders gut geeignet sind exotherme Reaktionen, und von diesen wiederum Oxidations-, Dehydrier-, Hydrier- und Oxidehydrierreaktionen, wobei als Beispiele die Herstellung von Phthalsäureanhydrid aus o-Xylol, von Acrolein aus Propen, von Acrylsäure aus Propen/Acrolein oder die Herstellung von Methacrylsäure aus Methacrolein genannt seien. Häufig handelt es sich bei Oxidationsreaktionen um heterogen katalysierte Reaktionen, bei denen der Katalysator als Feststoffteilchen vorliegt. Im allgemeinen werden solche Reaktionen als Gasphasenreaktion durchgeführt. Zum Einsatz kommen hierbei insbesondere Vollkatalysatoren oder mit Aktivmasse beschichtete Trägerkörper. In den Reaktions- und Thermorohren können Feststoffteilchen unterschiedlicher geometrischer Form und unterschiedlicher Größe verwendet werden, wobei eine Größe von 1 mm bis 40 mm charakteristischer Ausdehnung (oder charakteristischer Länge, engl. *characteristic dimension*) besonders bevorzugt ist. Ebenso kann die Schütthöhe der eingefüllten Feststoffteilchen variieren, wenn dies auch im allgemeinen vermieden wird.

Die Einstellung des geeigneten Druckverlusts und somit des Volumenstroms über den Feststoffteilchen, insbesondere dem Katalysator, erfolgt vorteilhafterweise durch den Einsatz von Feststoffteilchen unterschiedlicher Größe und/oder unterschiedlicher Geometrie. Vorteilhafterweise geht man hierbei so vor, daß die Feststoffteilchen, insbesondere der Katalysator, im Thermorohr mit Katalysator- oder Inertformkörpern unterschiedlicher Geometrie, die einen anderen Druckverlust als die Katalysatorformkörper in den Reaktionsrohren bewirken, vermischt werden. In Abhängigkeit davon, ob der Druckverlust im Thermorohr im Verhältnis zum Druckverlust in den Reaktionsrohren anzuheben oder abzusenken ist, wird vorzugsweise der Katalysator im Thermorohr mit Katalysatorbruchstücken definierter Größe, die aus dem ursprünglichen Katalysatorformkörper hergestellt werden, oder mit größeren Formkörpern vermischt. Daneben bietet sich auch der Einbau von Störkörpern in die Reaktionsrohre an.

In einer bevorzugten Ausführungsform der Erfindung wird für den Fall, daß der Druckverlust in den Thermorohren niedriger liegt als in den Reaktionsrohren, dieser wie folgt eingestellt (so daß die Masse an Katalysator in den Thermo- und Reaktionsrohren gleich ist):

Zunächst wird aus dem Katalysatormaterial eine Feinfraktion hergestellt. Dies kann entweder dadurch geschehen, daß produktionstechnisch ein geometrisch ähnlicher, aber kleinerer Katalysatorformkörper hergestellt wird, oder daß ein geometrisch ähnlicher kleinerer Formkörper hergestellt wird, oder daß das auch in den Reaktionsrohren verwendete Material zerkleinert wird und eine bestimmte Fraktion des zerkleinerten Materials herausgesiebt wird. Dieser Katalysator mit größerem Strömungswiderstand wird im folgenden *Feinfraktion* genannt. Zunächst wird der mittlere Druckverlust $p_m$ in den Reaktionsrohren bei Befüllung mit dem Katalysatormaterial bestimmt und anschließend der Druckverlust in dem zu füllenden Thermorohr bei Befüllung mit dem gleichen (und der gleichen Menge an) Katalysatormaterial. Letzterer Druckverlust wird $p_1$ genannt. Daraufhin wird das im Thermorohr vorliegende Katalysatormaterial abgesaugt und mit der gleichen Masse an Feinfraktion gefüllt. Der sich nun ergebende Druckverlust wird $p_2$ genannt. Gemäß unten stehender Formel (I) wird nun die Menge an Feinfraktion bestimmt, die dem in den Reaktionsrohren verwendeten Katalysatormaterial zugemischt wird, so daß die Summe beider Massen $m_{ges}$ gerade die Masse an Katalysatormaterial ergibt, die jeweils in die Reaktionsröhre eingefüllt wurde. Die Formel zur Bestimmung der Masse an Feinfraktion ergibt sich wie folgt:

$$m_{fein} = m_{ges} \ \frac{p_m - p_1}{p_2 - p_1} \qquad (1)$$

Das Katalysatormaterial und die Feinfraktion werden innig vermischt und in das Thermorohr eingefüllt. Der sich nun einstellende Druckverlust bei Gasdurchflußmengen proportional zur freien Querschnittsfläche liegt bei ± 8% im Bereich der Werte der Reaktionsrohre. Diese Vorgehensweise ermöglicht es, daß die gleiche Menge an Katalysator den identischen Druckverlust wie in den Reaktionsrohren erzeugt, obwohl unterschiedliche Querschnittsflächen bei den Reaktions- und Thermorohren vorliegen können.

Ein besonderer Vorteil dieser Vorgehensweise liegt auch darin, daß der Druckverlust im Thermorohr praktisch nicht nur den gleichen Endwert annimmt wie in den Reaktionsrohren, sondern gleichzeitig dieser Druckverlust stetig monoton mit der Schütthöhe zunimmt, wie es bei den Reaktionsrohren ebenfalls der Fall ist. Ein solcher Vorteil wird beim Einsatz von Störkörpern in der Schüttung nicht erzielt.

Liegt der Druckverlust im Thermorohr oberhalb des für die Reaktionsrohre bestimmten Druckverlusts, so ist die zuvor genannte Vorgehensweise zu modifizieren. In diesem Fall kommen Katalysatorkörper zur Einmischung zum Einsatz, die als Haufwerk einen geringeren Druckverlust zeigen als der in den Reaktionsrohren eingefüllte Katalysator.

Vorzugsweise liegt in den mit Feststoffteilchen gefüllten Rohrreaktoren eine turbulente Strömung vor, wie sie insbesondere unter industriell relevanten Bedingungen von Bedeutung ist. Dies entspricht einer Lineargeschwindigkeit des durchströmenden Fluids von 0,02 bis 20 m/s, insbesondere beträgt diese Lineargeschwindigkeit 0,3 bis 5 m/s. Der Druckverlust in den Rohrreaktoren liegt vorzugsweise im Bereich von 0,05 bis 2 bar, insbesondere bei 0,1 bis 1,5 bar.

Geeignete Temperaturmeßvorrichtungen sind Thermoelemente oder Widerstandsthermometer, wie sie üblicherweise zur Temperaturmessung in Reaktoren verwendet werden. Die Art dieser Temperaturmeßvorrichtungen unterliegt keinen besonderen Beschränkungen. Zwei Bauformen haben sich hierbei besonders bewährt. Bei der ersten wird das Thermoelement oder Widerstandsthermometer axial beweglich mittig im Rohrreaktor, in dem gemessen werden soll, eingebaut und durch axiale Verschiebung das Temperaturprofil ermittelt. Bei der zweiten Bauform werden Mehrfachelemente verwendet, deren Meßstellen an unterschiedlichen axialen Positionen in den Rohrreaktoren angeordnet sind, so daß sie Aussagen über den Temperaturverlauf entlang des Rohrreaktors liefern. Nur in den allerwenigsten Fällen ist eine einfache Messung an einem festen Punkt ausreichend. Vorteilhafterweise umfaßt die Temperaturmeßvorrichtung neben dem Thermoelement oder Widerstandsthermometer eine Thermoschutzhülse, in die es eingebaut wird, um es mechanisch gegen Beschädigung zu schützen, vor allem im industriellen Einsatz.

Das erfindungsgemäße Verfahren hat sich in einer Reihe von durchgeführten Versuchen bewährt. Die folgenden Versuche, die eine bevorzugte Ausführungsform der Erfindung darstellen, erläutern die Erfindung. Sie beschreiben den Fall, daß die Querschnittsfläche der Thermorohre größer ist als die der Reaktionsrohre.

## VERSUCHSDURCHFÜHRUNG

Die Versuchsanlage besteht aus einer Aufnahme für Rohre unterschiedlichen Durchmessers von 20 bis 30 mm, die in ein Heizbad, dessen Heizmedium eine Salzschmelze ist, eingebracht werden. Vom oberen Ende der Versuchsrohre können Propen, Stickstoff, Wasserdampf und Luft geregelt eingeleitet werden. Die verwendeten Rohre haben eine Länge von 2,80 m, von denen 2,50 m beheizt sind. In den Rohren befand sich BASF-Katalysator entsprechend DE 23 38 111 C2 in Form von Kugeln mit 3 mm Durchmesser, der die allgemeine Zusammensetzung $Mo_{12}Bi_a Me(1)_b Me(2)_c Me(3)_d Me(4)_e Me(5)_f Zn_h O_g$ hatte. Hierbei bedeuten:

Me(1)  In und/oder La
Me(2)  Fe und/oder Cu
Me(3)  Ni und/oder Co
Me(4)  mindestens ein Element aus der Gruppe: P, B, As, Cr, V und/oder W
Me(5)  mindestens ein Element aus der Gruppe: Cd, Ta, Nb, Ag, Pb, Mn, Re, Mg, Ca und/oder Ba
a  0,1 bis 6, vorzugsweise 0,5 bis 3
b  0,005 bis 3, vorzugsweise 0,01 bis 2
c  0,1 bis 8, vorzugsweise 0,3 bis 6
d  4 bis 12
e  0 bis 6, vorzugsweise 0,05 bis 5
f  0 bis 3
g  36 bis 102, vorzugsweise 38 bis 95
h  0,1 bis 10, vorzugsweise 0,5 bis 6.

Im speziellen Fall wurde ein Katalysator eingesetzt, der dem Beispiel 9 in DE 23 38 111 C2 entsprach, d.h. die Zusammensetzung lautete: $Mo_{12}Bi_1In_{0,1}Fe_2Ni_{6,0}P_{0,095}Zn_2O_g$, wobei g für den stöchiometrisch notwendigen Sauerstoffanteil in Abhängigkeit vom Oxidationszustand des Katalysators steht. Das Rohr war am unteren Ende verschlossen mit einer Metallgaze mit quadratischen Öffnungen von 2 x 2 mm und einem Drahtdurchmesser von etwa 0,5 mm. Das Reaktionsgasgemisch wurde im einfachen Durchgang durch den Reaktor geleitet.

Folgende Versuchsparameter wurden eingestellt:

Salzbad-Temperatur: 355°C
Volumenfluß Propen: 125 Nl(Normliter)/h
Volumenfluß Luft: 1.000 Nl/h
Volumenfluß Stickstoff: 1.000 Nl/h
Volumenfluß Wasserdampf: 500 Nl/h.

Diese Parameter wurden bei allen Versuchen (Nr. 1 bis 9) beibehalten.

Der Druckverlust über den Rohrreaktor wurde bei Versuch 1 bestimmt, indem 1,5 $m^3$/h Luft über das unten offene, mit Katalysator gefüllte Rohr geleitet wurde und der Druck auf der Eingangsseite bestimmt wurde, der nötig war, um diese Gasmenge aufrechtzuerhalten, abzüglich des Drucks auf der Ausgangsseite. Für die weiteren Versuche 2 bis 9 wurde entsprechend vorgegangen, wobei jedoch die eingestellte Menge an Meßluft, die durch das Rohr geleitet wurde, proportional zum freien Querschnitt des Rohrreaktors verändert wurde, so daß die mittlere Strömungsgeschwindigkeit im Rohrreaktor konstant blieb.

Bei Versuch 1 wurden 1.500 g Katalysator in ein Rohr mit 23 mm Innendurchmesser, Schüttdichte = 1,57, eingefüllt, was ab unterem Rohrende eine Füllhöhe von 2,31 m ergab. Die Versuche 2 bis 9 wurden, wie aus Tabelle 1 unten ersichtlich, mit Rohrreaktoren und Thermohülsen unterschiedlicher Durchmesser und mit einer Menge an Katalysator durchgeführt, die sich auf die Menge von Versuch 1 bezog und linear proportional zur freien Querschnittsfläche der jeweiligen Anordnung war. Hierbei ergaben sich Füllhöhen von 2,31 ± 0,12 m. Bei den Versuchen 1 bis 5 wurden ausschließlich die angegebenen Kugeln mit 3 mm Durchmesser eingefüllt, die somit bei unterschiedlichen Durchmessern der Rohre und Thermohülsen unterschiedlicher Druckverluste in den Rohren ergaben. Bei den Versuchen 6 bis 9 wurde der gleiche Druckverlust wie in Versuch 1 im Thermorohr eingestellt, wobei gemäß dem oben beschriebenen Verfahren (vgl. Formel (I)) vorgegangen wurde. Hierzu wurden die Versuche 2 bis 5 derart wiederholt, daß sich die jeweilige Katalysatormenge aus kugelförmigem Material plus einer nach Formel (I) berechneten Menge an Feinfraktion zusammensetzte, so daß der Druckverlust im Rahmen der Meßgenauigkeit derselbe wie in Versuch 1 war. Dabei wurde zunächst der Druckverlust von 1.500 g reiner Feinfraktion in den verschiedenen Rohrreaktoren mit den unterschiedlichen Thermohülsen ermittelt. Als Feinfraktion kam der gleiche Katalysator zum Einsatz, wobei dieser zuvor mechanisch zerkleinert worden war. Von dieser zerkleinerten Fraktion wurde zunächst alles abgetrennt, was ein Sieb mit der Maschenweite 1 mm passierte. Danach wurde alles abgetrennt, was nicht durch ein Sieb der Maschenweite 2 mm hindurchging, so daß eine Feinfraktion mit oben und unten genau begrenzter Korngrößenverteilung erhalten wurde.

Zur Auswertung der Versuche wurde jeweils das axiale Temperaturprofil, das sich im Reaktor einstellte, gemessen sowie der Umsatz an Propen und die Ausbeute an Acrolein durch Totalkondensation der gebildeten Produkte und gaschromatographische Analytik bestimmt. Das axiale Temperaturprofil in der Katalysatorschüttung wurde nach 2 h kontinuierlichen Betriebs gemessen, wobei zum Vergleich der Versuche untereinander die Temperaturen alle 10 cm ab Beginn der Heizzone (Entfernung in Flußrichtung) gemessen wurden sowie der Punkt der höchsten gemessenen Temperatur ("*hot spot*") verzeichnet wurde. Von besonderer Aussagekraft waren bei diesen Reaktionen die Temperaturen auf den ersten 90 cm. Der Druckverlust über das Rohr wurde vor und nach dem Versuch gemessen.

Die unten stehende Tabelle faßt die bei den Versuchen 1 bis 9 vorliegenden Versuchsbedingungen zusammen. Wie hieraus ersichtlich ist, diente Versuch 1 als Bezugssystem bzw. -versuch und stellte die Situation in einem Reaktionsrohr dar.

## Tabelle 1

| Versuch Nr. | Ø Rohr-reaktor mm | Ø Thermo-hülse mm | freie Quer-schnitts-fläche (QSF) Rohrreaktor mm$^2$ | freie QSF, bezogen auf freie QSF von Versuch 1 | eingefüllte Katalysator-menge g | Druckverlust Kugelma-terial (1.500 g) mbar | Druckverlust Feinfraktion (1.500 g) mbar | Menge an Kugel-material g | errechnete Menge an Feinfraktion g | Umfang Rohr-reaktor mm | freie QSF/ Umfang mm |
|---|---|---|---|---|---|---|---|---|---|---|---|
| 1* | 23 | - | 415 | 1,00 | 1.500 | 312 | - | 1.500 | - | 72,2 | 5,75 |
| 2** | 25 | 5 | 471 | 1,13 | 1.695 | 284 | - | 1.695 | - | 78,5 | 6,00 |
| 3** | 25 | 8 | 441 | 1,06 | 1.590 | 266 | - | 1.500 | - | 78,5 | 5,62 |
| 4** | 30 | 5 | 687 | 1,66 | 2.490 | 286 | - | 2.490 | - | 94,2 | 7,29 |
| 5** | 30 | 8 | 657 | 1,58 | 2.370 | 292 | - | 2.370 | - | 94,2 | 6,98 |
| 6 | 25 | 5 | 471 | 1,13 | 1.695 | 284 | 554 | 1.519 | 176 | 78,5 | 6,00 |
| 7 | 25 | 8 | 441 | 1,06 | 1.590 | 266 | 514 | 1.295 | 295 | 78,5 | 5,62 |
| 8 | 30 | 5 | 687 | 1,66 | 2.490 | 286 | 602 | 2.285 | 205 | 94,2 | 7,29 |
| 9 | 30 | 8 | 657 | 1,58 | 2.370 | 292 | 658 | 2.240 | 130 | 94,2 | 6,98 |

\*   Bezugssystem (Reaktionsrohr)
\**  Vergleichsversuche

EP 0 873 783 B1

**Versuch 1**

Bei Versuch 1 kam ein Rohr mit 23 mm Innendurchmesser zum Einsatz, das einen freien Querschnitt von 415 mm$^2$ besaß. Vor Versuchsbeginn war axial in der Mitte der Schüttung ein dünnes Thermoelement mit einem Durchmesser von 0,75 mm eingelassen worden, das so eingeschüttet wurde, daß es sich zwar noch einmal oben herausziehen ließ, dann aber nicht mehr zurückbewegt werden konnte. Diese Anordnung gewährleistete die geringstmögliche Störung der Katalysatorschüttung.

Die Versuchsergebnisse sind in Tabelle 2 dargestellt.

Tabelle 2

| Entfernung in Flußrichtung | Temperatur in °C | |
|---|---|---|
| 0 | 356 | |
| 10 | 358 | |
| 20 | 384 | |
| 30 | 406 | |
| 40 | 402 | |
| 50 | 396 | |
| 60 | 391 | |
| 70 | 388 | |
| 80 | 386 | |
| 90 | 387 | |
| 32 | 408 | *Hot Spot* |
| | | |
| Umsatz an Propen | 96,6% | |
| Ausbeute an Acrolein | 88,0% | |
| Druckverlust in mbar | 312 | |

**Versuch 2**

Es wurde wie in Versuch 1 vorgegangen, wobei jedoch ein Rohr von 25 mm$^2$ Durchmesser benutzt wurde und das Thermoelement in einer Thermohülse mit 5 mm Durchmesser steckte. Somit lag ein freier Querschnitt von 471 mm$^2$ vor. Die Versuchsergebnisse sind in Tabelle 3 dargestellt.

Tabelle 3

| Entfernung in Flußrichtung | Temperatur in °C | |
|---|---|---|
| 0 | 356 | |
| 10 | 357 | |
| 20 | 372 | |
| 30 | 384 | |
| 40 | 391 | |
| 50 | 390 | |
| 60 | 386 | |
| 70 | 383 | |
| 80 | 379 | |
| 90 | 377 | |

Tabelle 3   (fortgesetzt)

| Entfernung in Flußrichtung | Temperatur in °C | |
|---|---|---|
| 41 | 392 | **Hot Spot** |
| | | |
| Umsatz an Propen | 94,2% | |
| Ausbeute an Acrolein | 84,0% | |
| Druckverlust in mbar | 284 | |

**Versuch 3**

Es wurde wie in Versuch 2 vorgegangen, jedoch betrug der Durchmesser der Thermohülse 8 mm. Somit lag eine freie Querschnittsfläche von 441 mm$^2$ vor. Die Versuchsergebnisse sind in Tabelle 4 dargestellt.

Tabelle 4

| Entfernung in Flußrichtung | Temperatur in °C | |
|---|---|---|
| 0 | 355 | |
| 10 | 356 | |
| 20 | 366 | |
| 30 | 376 | |
| 40 | 380 | |
| 50 | 382 | |
| 60 | 380 | |
| 70 | 379 | |
| 80 | 378 | |
| 90 | 376 | |
| 50 | 382 | **Hot Spot** |
| | | |
| Umsatz an Propen | 94,4% | |
| Ausbeute an Acrolein | 86,5% | |
| Druckverlust in mbar | 266 | |

**Versuch 4**

Es wurde wie in Versuch 2 vorgegangen, jedoch betrug der innere Durchmesser des Reaktionsrohrs 30 mm, so daß die freie Querschnittsfläche 687 mm$^2$ betrug. Die Versuchsergebnisse sind in Tabelle 5 dargestellt.

Tabelle 5

| Entfernung in Flußrichtung | Temperatur in °C | |
|---|---|---|
| 0 | 357 | |
| 10 | 362 | |
| 20 | 396 | |
| 30 | 412 | |
| 40 | 408 | |
| 50 | 404 | |

Tabelle 5 (fortgesetzt)

| Entfernung in Flußrichtung | Temperatur in °C | |
|---|---|---|
| 60 | 401 | |
| 70 | 395 | |
| 80 | 391 | |
| 90 | 387 | |
| 28 | 415 | *Hot Spot* |
| | | |
| Umsatz an Propen | 98,2% | |
| Ausbeute an Acrolein | 82,7% | |
| Druckverlust in mbar | 215 | |

**Versuch 5**

Es wurde wie in Versuch 3 vorgegangen, jedoch betrug der innere Durchmesser des Reaktionsrohrs 30 mm, so daß die freie Querschnittsfläche 657 mm$^2$ betrug. Die Versuchsergebnisse sind in Tabelle 6 dargestellt.

Tabelle 6

| Entfernung in Flußrichtung | Temperatur in °C | |
|---|---|---|
| 0 | 355 | |
| 10 | 360 | |
| 20 | 388 | |
| 30 | 409 | |
| 40 | 404 | |
| 50 | 400 | |
| 60 | 397 | |
| 70 | 394 | |
| 80 | 391 | |
| 90 | 388 | |
| 32 | 411 | *Hot Spot* |
| | | |
| Umsatz an Propen | 97,5% | |
| Ausbeute an Acrolein | 85,3% | |
| Druckverlust in mbar | 196 | |

**Versuch 6**

In diesem Versuch wurde Versuch 2 wiederholt, wobei jedoch Feinfraktion gemäß Tabelle 1 eingesetzt wurde, so daß sich die Katalysatormenge aus dem kugelförmigen Katalysator sowie der berechneten Menge an Feinfraktion ergaben. Die Versuchsergebnisse sind in Tabelle 7 dargestellt.

Tabelle 7

| Entfernung in Flußrichtung | Temperatur in °C | |
|---|---|---|
| 0 | 357 | |

Tabelle 7   (fortgesetzt)

| Entfernung in Flußrichtung | Temperatur in °C | |
|---|---|---|
| 10 | 359 | |
| 20 | 383 | |
| 30 | 407 | |
| 40 | 403 | |
| 50 | 393 | |
| 60 | 390 | |
| 70 | 386 | |
| 80 | 382 | |
| 90 | 382 | |
| 35 | 408 | *Hot Spot* |
| | | |
| Umsatz an Propen | 96,5% | |
| Ausbeute an Acrolein | 88,2% | |
| Druckverlust in mbar | 306 | |

**Versuch 7**

Es wurde wie in Versuch 3 vorgegangen (d.h. gleiche Geometrie von Rohr und Thermohülse), jedoch wurde der Druckverlust mittels 295 g Feinfraktion (gemäß Tabelle 1) eingestellt. Die Versuchsergebnisse sind in Tabelle 8 dargestellt.

Tabelle 8

| Entfernung in Flußrichtung | Temperatur in °C | |
|---|---|---|
| 0 | 356 | |
| 10 | 359 | |
| 20 | 386 | |
| 30 | 404 | |
| 40 | 403 | |
| 50 | 392 | |
| 60 | 391 | |
| 70 | 386 | |
| 80 | 385 | |
| 90 | 384 | |
| 38 | 404 | *Hot Spot* |
| | | |
| Umsatz an Propen | 96,4% | |
| Ausbeute an Acrolein | 88,0% | |
| Druckverlust in mbar | 314 | |

**Versuch 8**

Bei diesem Versuch wurde wie in Versuch 4 vorgegangen, wobei jedoch der Druckverlust mittels 205 g Feinfraktion (vgl. Tabelle 1) eingestellt wurde. Die Versuchsergebnisse sind in Tabelle 9 dargestellt.

Tabelle 9

| Entfernung in Flußrichtung | Temperatur in °C | |
|---|---|---|
| 0 | 354 | |
| 10 | 357 | |
| 20 | 386 | |
| 30 | 404 | |
| 40 | 408 | |
| 50 | 400 | |
| 60 | 394 | |
| 70 | 392 | |
| 80 | 390 | |
| 90 | 389 | |
| 40 | 408 | **Hot Spot** |
| | | |
| Umsatz an Propen | 95,8% | |
| Ausbeute an Acrolein | 87,8% | |
| Druckverlust in mbar | 313 | |

**Versuch 9**

Bei diesem Versuch wurden 130 g Feinfraktion (vgl. Tabelle 1) zur Einstellung des gewünschten Druckverlusts verwendet. Ansonsten ist dieser Versuch identisch mit Versuch 5. Die Versuchsergebnisse sind in Tabelle 10 dargestellt.

Tabelle 10

| Entfernung in Flußrichtung | Temperatur in °C | |
|---|---|---|
| 0 | 355 | |
| 10 | 356 | |
| 20 | 384 | |
| 30 | 405 | |
| 40 | 406 | |
| 50 | 403 | |
| 60 | 396 | |
| 70 | 392 | |
| 80 | 390 | |
| 90 | 387 | |
| 41 | 407 | **Hot Spot** |
| | | |
| Umsatz an Propen | 96,6% | |

EP 0 873 783 B1

Tabelle 10 (fortgesetzt)

| Entfernung in Flußrichtung | Temperatur in °C | |
|---|---|---|
| Ausbeute an Acrolein | 88,1% | |
| Druckverlust in mbar | 308 | |

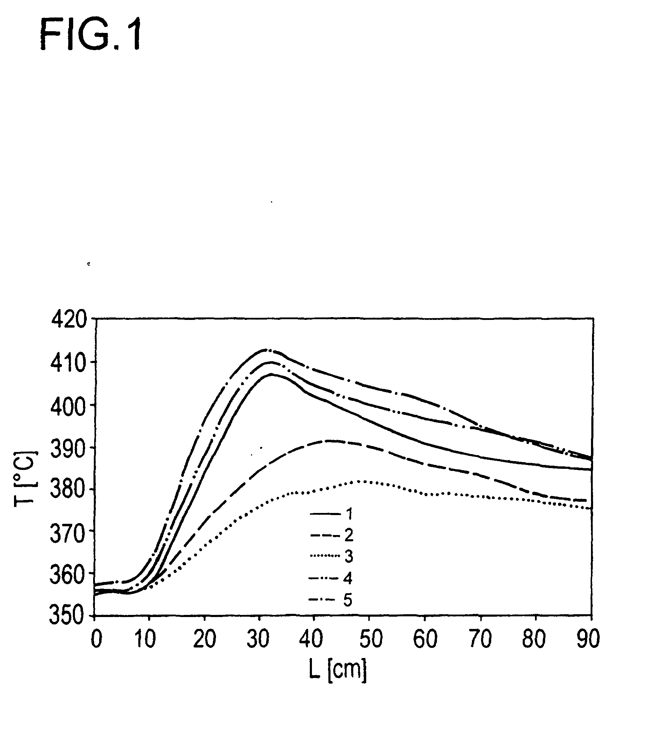

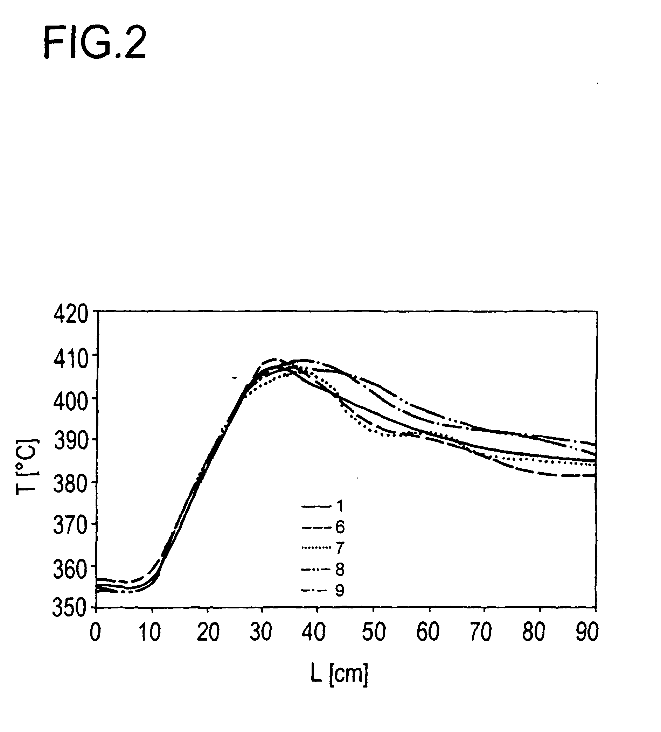

Die in den Tabellen 2 bis 10 gezeigten Versuchsergebnisse sind auch in den Figuren 1 und 2 als Funktion der Temperatur T (in °C; Ordinate) in Abhängigkeit von *der* Länge L ab Beginn der Heizzone (in cm; Abszisse) dargestellt, wobei die Figur 1 die Versuche 1 bis 5 zeigt und die Figur 2 die Versuche 1 und 6 bis 9 zeigt (die am rechten Rand der Figuren angegebenen Ziffern und Stricharten beziehen sich auf die den Ziffern entsprechenden Versuche). Hieraus ist ersichtlich, daß die Anwendung des erfindungsgemäßen Verfahrens (Versuche 6 bis 9) das Temperaturprofil im Reaktionsrohr gemäß Versuch 1 besser darstellt als die Vergleichsversuche 2 bis 5, in denen ein anderer Druckverlust vorlag als in Versuch 1. Aus den Figuren 1 und 2 ist auch ersichtlich, daß die besten Ergebnisse dann erzielt werden, wenn das Verhältnis von freier Querschnittsfläche zum Umfang des jeweiligen Rohrreaktors möglichst identisch ist, wie es in den Versuchen 6 und 7 der Fall ist. Letztere Versuche sind dem Bezugsversuch 1 thermisch besonders ähnlich. Somit ermöglicht das erfindungsgemäße Verfahren mit gutem Erfolg die repräsentative Temperaturmessung in mit Katalysator gefüllten Rohrreaktoren.

## Patentansprüche

1. Reaktorvorrichtung umfassend mindestens zwei gleichartige, mit Feststoffteilchen gefüllte Rohrreaktoren mit und ohne Temperaturmeßvorrichtung, wobei in wenigstens einem Rohrreaktor eine Temperaturmeßvorrichtung angeordnet ist, **dadurch gekennzeichnet, daß** die Rohrreaktoren so ausgelegt sind, daß sowohl das Verhältnis von Masse der Feststoffteilchen zur freien Querschnittsfläche des jeweiligen Rohrreaktors gleich ist als auch der Druckverlust, gemessen durch Leiten eines inerten Gases proportional quer zur freien Querschnittsfläche, über den jeweiligen Rohrreaktor gleich ist.

2. Vorrichtung nach Anspruch 1, **dadurch gekennzeichnet, daß** die Rohrreaktoren weiterhin so ausgelegt sind, daß das Verhältnis von freier Querschnittsfläche zum Umfang gleich ist.

3. Vorrichtung nach Anspruch 1 oder 2, **dadurch gekennzeichnet, daß** der Druckverlust durch Feststoffteilchen unterschiedlicher Größe und/oder unterschiedlicher Geometrie eingestellt ist.

4. Vorrichtung nach einem der Ansprüche 1 bis 3, **dadurch gekennzeichnet, daß** der Druckverlust durch eine Feinfraktion der Feststoffteilchen eingestellt ist gemäß folgender Formel

$$m_{fein} = m_{ges} \frac{p_m - p_1}{p_2 - p_1} \tag{1}$$

wobei $m_{fein}$ die Masse an Feinfraktion, $m_{ges}$ die Gesamtmasse an Feststoffteilchen und Feinfraktion, $p_m$ den mittleren Druckverlust in den Rohrreaktoren ohne Temperaturmeßvorrichtung, $p_1$ den Druckverlust im Rohrreaktor mit Temperaturmeßvorrichtung bei Befüllung mit Feststoffteilchen und $p_2$ den Druckverlust im Rohrreaktor mit Temperaturmeßvorrichtung bei Befüllung mit Feinfraktion darstellt.

5. Vorrichtung nach einem der vorhergehenden Ansprüche, **dadurch gekennzeichnet, daß** die Temperaturmeßvorrichtung axial beweglich mittig im Rohrreaktor angeordnet ist.

6. Vorrichtung nach einem der Ansprüche 1 bis 4, **dadurch gekennzeichnet, daß** die Temperaturmeßvorrichtung Mehrfachelemente umfaßt, deren Meßstellen an unterschiedlichen axialen Positionen des Rohrreaktors angeordnet sind.

7. Verfahren zur Behandlung von fluiden Massen unter Erzeugung oder Verbrauch von thermischer Energie, bei der die fluiden Massen durch eine Reaktorvorrichtung umfassend mindestens zwei gleichartige, mit Feststoffteilchen gefüllte Rohrreaktoren mit und ohne Temperaturmeßvorrichtung geführt werden, wobei in wenigstens einem Rohrreaktor eine Temperaturmeßvorrichtung angeordnet ist, und wobei in dieser die Temperatur gemessen wird, **da-**

12

**durch gekennzeichnet, daß** eine Reaktorvorrichtung wie in einem der Ansprüche 1 bis 6 definiert verwendet wird.

8. Verfahren nach Anspruch 7, **dadurch gekennzeichnet, daß** eine Strömungsgeschwindigkeit in der Reaktorvorrichtung von 0,02 *bis* 20 m/s eingestellt wird.

9. Verfahren nach Anspruch 7 oder 8, **dadurch gekennzeichnet, daß** es
sich bei der in den Rohrreaktoren ablaufenden Reaktion um eine exotherme Reaktion handelt.

10. Verfahren nach einem der Ansprüche 7 bis 9, **dadurch gekennzeichnet, daß** es sich bei der in den Rohrreaktoren ablaufenden Reaktion um eine Oxidationsreaktion handelt, die mittels eines heterogenen Katalysators als Feststoffteilchen durchgeführt wird.

**Claims**

1. A reactor apparatus comprising at least two same-type tubular reactors with and without a temperature measuring unit which are packed with solid particles, a temperature measuring unit being arranged in at least one tubular reactor, wherein the tubular reactors are designed such that not only the ratio of the mass of the solid particles to the free cross-sectional area of the respective tubular reactor but also the pressure drop, measured by an inert gas being conducted proportionately transversely to the free cross-sectional area, across the respective tubular reactor is equal.

2. An apparatus as claimed in claim 1, wherein the tubular reactors are further designed such that the ratio of free cross-sectional area to the circumference is equal.

3. An apparatus as claimed in claim 1 or 2, wherein the pressure drop is adjusted by solid particles having different sizes and/or different geometries.

4. An apparatus as claimed in any one of claims 1 to 3, wherein the pressure drop is adjusted by a fines fraction of the solid particles in accordance with the following formula

$$m_{fines} = m_{tot} = \frac{p_m - p_1}{p_2 - p_1} \qquad (I)$$

where $m_{fines}$ represents the mass of fines fraction, $m_{tot}$ represents the total mass of solid particles and fines fraction, $p_m$ represents the mean pressure drop in the tubular reactors without a temperature measuring unit, $p_1$ represents the pressure drop in the tubular reactor including a temperature measuring unit when packed with solid particles, and $p_2$ represents the pressure drop in the tubular reactor including temperature measuring unit and packed with fines fraction.

5. An apparatus as claimed in any one of the preceding claims, wherein the temperature measuring unit is arranged axially displaceably and centrally in the tubular reactor.

6. An apparatus as claimed in any one of claims 1 to 4, wherein the temperature measuring unit comprises multiple elements whose measuring points are disposed at different axial positions of the tubular reactor.

7. A method for treating fluid masses while generating or consuming thermal energy, in which the fluid masses are passed through a reactor apparatus comprising at least two same-type tubular reactors with and without a temperature measuring unit which are packed with solid particles, a temperature measuring unit being arranged in at least one tubular reactor in which the temperature is measured, said method employing a reactor apparatus as defined in any one of claims 1 to 6.

8. A method as claimed in claim 7, wherein a flow velocity of from 0.02 to 20 m/s is set in the reactor apparatus.

9. A method as claimed in claim 7 or 8, wherein the reaction proceeding in the tubular reactors is an exothermic reaction.

**10.** A method as claimed in any one of claims 7 to 9, wherein the reaction proceeding in the tubular reactors is an oxidation, reaction, which is carried out by means of a heterogeneous catalyst as solid particles.

**Revendications**

**1.** Dispositif comprenant au moins deux réacteurs tubulaires de même type, remplis de particules dé matière solide, avec et sans dispositif de mesure de température, dans lequel est agencé dans au moins un réacteur tubulaire un dispositif de mesure de température, **caractérisé en ce que** les réacteurs tubulaires sont conçus de façon que non seulement le rapport entre la masse des particules de matière solide et la surface en section transversale libre du réacteur tubulaire respectif soit identique, mais aussi que la perte de pression, mesurée par guidage d'un gaz inerte de manière proportionnelle transversalement à la surface en section transversale libre, au travers du réacteur tubulaire respectif soit identique.

**2.** Dispositif suivant la revendication 1, **caractérisé en ce que** les réacteurs tubulaires sont, en outre, conçus de façon que le rapport entre la surface en section transversale libre et le pourtour soit identique.

**3.** Dispositif suivant l'une des revendications 1 et 2, **caractérisé en ce que** la perte de pression est ajustée par des particules de matière solide de grosseur différente et/ou de géométrie différente.

**4.** Dispositif suivant l'une des revendications 1 à 3, **caractérisé en ce que** la perte de pression est ajustée par une fraction fine des particules de matière solide conformément à la formule suivante :

$$m_f = m_g \; \frac{p_m - p_1}{p_2 - p_1} \qquad \qquad \text{(I)}$$

dans laquelle $m_f$ représente la masse de la fraction fine, $m_g$ est la masse globale de particules de matière solide et de fraction fine, $p_m$ est la perte de pression moyenne dans les réacteurs tubulaires sans dispositif de mesure de température, $p_1$ est la perte de pression dans le réacteur tubulaire avec dispositif de mesure de température lors d'un chargement avec des particules de matière solide et $p_2$ est la perte de pression dans le réacteur tubulaire avec dispositif de mesure de température lors d'un chargement avec une fraction fine.

**5.** Dispositif suivant l'une des revendications précédentes, **caractérisé en ce que** le dispositif de mesure de température est agencé de manière axialement déplaçable au milieu du réacteur tubulaire.

**6.** Dispositif suivant l'une des revendications 1 à 4, **caractérisé en ce que** le dispositif de mesure de température comporte des éléments multiples dont les emplacements de mesure sont agencés en des positions axiales différentes du réacteur tubulaire.

**7.** Procédé de traitement de masses fluides avec production ou consommation d'énergie thermique, dans lequel les masses fluides sont guidées au travers d'un dispositif comprenant au moins deux réacteurs tubulaires de même type, remplis de particules de matière solide, avec et sans dispositif de mesure de température, un dispositif de mesure de température étant agencé dans au moins un réacteur tubulaire et la température étant mesurée dans celui-ci, **caractérisé en ce qu'**on utilise un dispositif tel que défini dans l'une des revendications 1 à 6.

**8.** Procédé suivant la revendication 7, **caractérisé en ce qu'**une vitesse d'écoulement de 0,02 à 20 m/s est ajustée dans le dispositif à réacteur.

**9.** Procédé suivant l'une des revendications 7 et 8, **caractérisé en ce que**, pour ce qui concerne la réaction qui se déroule dans les réacteurs tubulaires, il s'agit d'une réaction exothermique.

**10.** Procédé suivant l'une des revendications 7 à 9, **caractérisé en ce que**, pour ce qui concerne la réaction qui se déroule dans les réacteurs tubulaires, il s'agit d'une réaction d'oxydation qui est effectuée au moyen d'un catalyseur hétérogène sous la forme de particules de matière solide.

# FIG.1

# FIG.2